# EUROPÄISCHE PATENTANMELDUNG

(11) **EP 1 304 608 A1**
(43) Veröffentlichungstag der Anmeldung: **23.04.2003**
(21) Anmeldenummer: 02022786.4
(22) Anmeldetag: 11.10.2002
(51) Int. Cl.: G05D 23/20, F25B 49/04

(54) **Energiebetriebsvorrichtung**

(30) Priorität: 15.10.2001 DE 10150819
(71) Anmelder: Dometic GmbH, 57074 Siegen (DE)
(72) Erfinder: Müller, Volker, 57271 Hilchenbach (DE); Peter, Jörg, 57072 Siegen (DE)
(74) Vertreter: Grosse, Wolfgang, Dipl.-Ing.

(57) **Zusammenfassung**

Eine Energiebetriebsvorrichtung dient zum Betreiben eines Absorptionskühlgeräts mit unterschiedlichen Energiequellen und umfaßt eine Energiesteuereinheit (7) zum Steuern und Auswählen einer Energiequelle. Sie besitzt wenigstens eine Gasbetriebseinheit (8-12) zum Betreiben des Absorptionskühlgeräts mit Gas mit einem mit einer Gaszufuhrleitung verbundenen Gasbrenner (11), der über ein Überwachungssystem steuerbar ist. Das Überwachungssystem ist ein Zündüberwachungssystem und umfaßt einen Ionisationsfühler und/oder UV-Sensor zum Überwachen der Gasflamme des Gasbrenners (11).

## Beschreibung

Die Erfindung betrifft eine Energiebetriebsvorrichtung zum Betreiben eines Absorptionskühlgeräts mit unterschiedlichen Energiequellen, insbesondere eines Absorptionskühlgerät, das zum Einbau in Wohnwagen, Caravans und dergleichen vorgesehen ist. Ferner betrifft die Erfindung einen Absorptionskühlschrank, der eine Energiebetriebsvorrichtung zum Betrieb mit unterschiedlichen Energiequellen aufweist und vorzugsweise zum Einbau in Wohnwagen, Caravans u.ä. vorgesehen ist.

Aus der DE 31 33 686 C2 ist ein Absorberkühlgerät eines Kühlschranks für Reisemobile u.dgl. bekannt, das mit einer Wechselstromquelle, Gleichstromquelle oder einer Flüssiggasquelle betrieben werden kann. Hierfür kann das Absorberkühlgerät mittels einer elektrischen Schaltung, die eine Vielzahl von Schaltern und Relais aufweist, automatisch umgeschaltet werden. Insbesondere wird bei dieser Schaltung festgestellt, wenn bei Betrieb mit Wechselstrom oder Gleichstrom die Spannung unter einen vorbestimmten Wert sinkt, und anschließend wird auf eine andere Energiebetriebsart umgeschaltet. Das Gasbetriebssystem des Absorberkühlgeräts weist ein Überwachungssystem mittels eines Thermoschalters auf, weil über den Thermoschalter das Erlöschen der Gasflamme ermittelt wird und ein Ventil angesteuert wird, das die Gaszufuhr unterbricht. Es erweist sich bei dieser Störfallüberwachung als nachteilig, daß der Thermoschalter eine sehr lange Ansprechzeit von 30 bis 60 Sekunden Aus der US 4,656,831 ist ein gasbetriebener Absorptionskühlschrank bekannt, dessen Gaszufuhr über ein magnetisch steuerbares Ventil geregelt wird. Die Vorrichtung weist im Bereich der Zündvorrichtung für den Gasbrenner ein Thermoelement auf, welches die Flamme des Brenners überwacht und ein "elektrisch ansteuerbares Ventil" zum Unterbrechen der Gaszufuhr ansteuert, wenn die Flamme des Brenners ausgeht. Ferner ist ein weiterer Sensor vorgesehen, der an eine Zeitschaltvorrichtung gekoppelt ist, und den Zündvorgang der Gasflamme überwacht. Insbesondere wird durch diesen Sensor gewährleistet, daß der Zündvorgang nicht sofort wiederholt wird, wenn die Zündung fehlgeschlagen ist. Dieses System weist zur Überwachung der Gasflamme ebenfalls nur Thermoelemente auf, die eine relativ lange Ansprechzeit haben.

Aufgabe der Erfindung ist es, die Sicherheit des Gasbetriebs in einem Energiebetriebssystem eines Absorberkühlschranks zu verbessern und eine genauere Steuerung des Gesamtsystems zu erreichen.

Diese Aufgabe wird durch die Energiebetriebsvorrichtung gemäß Anspruch 1 sowie durch den Absorptionskühlschrank gemäß Anspruch 14 erreicht.

Die erfindungsgemäße Energiebetriebsvorrichtung ermöglicht den Betrieb eines Absorptionskühlaggregats mit unterschiedlichen Energiequellen und weist hierfür eine Energiesteuereinheit zum Steuern und Auswählen der Energiequellen auf. Ferner umfaßt das System eine Gasbetriebseinheit zum Betreiben des Absorptionskühlgeräts mit Gas, wobei die Gasbetriebseinheit über einen Brenner verfügt, der mit einer Gaszufuhrleitung verbunden ist und über ein Zündüberwachungssystem steuerbar ist. Die Erfindung zeichnet sich dadurch aus, daß das Zündüberwachungssystem einen Ionisationsfühler und/oder UV-Sensor zum Überwachen der Gasflamme des Gasbrenners umfaßt. Die Verwendung von solchen Fühlern ist an sich aus Gasfeuerungsautomaten bekannt, jedoch wurde noch nie deren Verwendung in Energiebetriebssystemen für Absorberkühlschränke vorgeschlagen.

Bei der Überwachung mit Ionisationsfühlern wird eine Wechselspannung zwischen der Fühlerelektrode und der Gasbrennermasse angelegt. Die Flamme richtet die Spannung gleich, und dieses Gleichstromsignal wird von der Energiesteuervorrichtung erkannt. Demgegenüber wird bei der UV-Überwachung ein UV-Sensor verwendet, der im wesentlichen aus einer UV-empfindlichen Röhre und elektronischen Bauelementen besteht. Nur bei UV-Strahlung, die durch die Gasflamme des Brenners erzeugt wird, schaltet die Röhre durch. Das Durchschalten der Röhre wird ebenfalls durch die Energiesteuereinheit festgestellt. Es erweist sich bei der erfindungsgemäßen Energiebetriebsvorrichtung als wesentlicher Vorteil, daß die Überwachung mit Ionisationsfühlern bzw. UV-Sensoren sehr genau und nahezu verzögerungsfrei ein Ausfallen der Gasflamme festgestellt werden kann. Deshalb kann ein Störfall im Gasbetrieb wesentlich schneller ermittelt und als entsprechende Konsequenz die Gaszufuhr unterbrochen werden. Hierdurch wird eine wesentlich genauere Steuerung des Systems und eine verbesserte Sicherheit im Gasbetrieb gewährleistet.

In einer bevorzugten Ausführungsform ist der Ionisationsfühler in die Zündelektrode des Gasbrenners integriert. Dies ermöglicht eine kompakte Bauweise der Gasbetriebseinheit.

In einer weiteren Ausführungsform weist die Gaszufuhrleitung ein über Pulsweitenmodulation elektrisch ansteuerbares Ventil auf, welches die Gaszufuhr unterbricht, wenn das Absorptionsaggregat nicht über Gas betrieben wird bzw. wenn bei der Energiesteuereinheit ein Störfall festgestellt wird. Bei der Steuerung des elektrisch ansteuerbaren Ventils über Pulsweitenmodulation wird zum Öffnen der Gaszufuhrleitung zunächst ein Puls zum Anziehen des Ventils ausgegeben, und anschließend wird die Spannung durch Pulsweitenmodulation abgesenkt. Dies hat den Vorteil, daß der elektrische Energieverbrauch bei Gasbetrieb sehr gering gehalten wird.

In einer weiteren bevorzugten Ausführungsform weist das System eine Wechselstrombetriebseinheit zum Betreiben eines Absorptionskühlgeräts mit Netzspannung, insbesondere 230V-Netzspannung auf. Ferner ist in einer besonders bevorzugten Ausführungsform zusätzlich eine Gleichstrombetriebseinheit zum Betreiben des Kühlaggregats mit Gleichspannung, insbesondere 12V-Gleichspannung vorgesehen.

Zum automatischen Umschalten auf unterschiedliche Energiequellen ist in einer weiteren Ausgestaltung der Erfindung eine Unterspannungserkennungseinheit vorgesehen, welche derart mit der Energiesteuervorrichtung und der Wechselspannungsbetriebseinheit gekoppelt ist, daß das Energiesteuersystem den Wechselstrombetrieb auswählt, wenn die Unterspannungserkennungseinheit eine Spannung über einem Schwellwert ermittelt und das Energiesteuersystem auf Gasbetrieb oder Gleichspannungsbetrieb umschaltet, wenn die Unterspannungserkennungseinheit eine Spannung ermittelt, die unter dem Schwellwert liegt. Hierdurch wird gewährleistet, daß das System bei Abschalten der Netzspannung automatisch mit einer anderen Energiequelle betrieben wird. Die Gleichspannungsbetriebseinheit des Systems ist vorzugsweise in der Generatorbetriebseinheit, insbesondere die Lichtmaschine des Fahrzeugs, in dem das Absorptionskühlaggregat eingebaut ist.

Die Gleichspannungsbetriebseinheit 1 kann ferner auch noch eine Batterie- und/oder Solarbetriebseinheit umfassen. Dies ermöglicht den Betrieb mittels Gleichstrom, auch wenn der Generator der Gleichspannungsbetriebseinheit abgeschaltet ist.

Sofern das System eine Gleichstrombetriebseinheit aufweist, ist in einer bevorzugten Ausführungsform eine Gleichstromdetektionseinrichtung vorgesehen, die mit dem Energiesteuersystem gekoppelt ist, so daß das Energiesteuersystem den Gleichstrombetrieb auswählt, wenn Gleichstrom detektiert wird und einen anderen Energiebetrieb auswählt, wenn kein bzw. sehr geringer Gleichstrom detektiert wird. Hierdurch wird das Umschalten auf eine andere Energieart gewährleistet, wenn der Gleichstrom des Systems ausfällt, beispielsweise wenn der Generator des Systems abgeschaltet wird.

Zur Steuerung der optimalen Energieleistung ist in einer vorteilhaften Ausgestaltung der Erfindung ein Temperatursensor, insbesondere ein NTC-Sensor, zur Anordnung im Kühlschrank des Absorptionskühlaggregats vorgesehen, wobei der Temperatursensor mit der Energiesteuervorrichtung verbunden ist und mittels der von dem Sensor ermittelten Temperatur die unterschiedlichen Energiebetriebsarten steuerbar sind.

Neben der automatischen Energiebetriebssteuerung ist in einer weiteren Ausgestaltung der Erfindung ferner eine manuelle Umschaltmöglichkeit gegeben, welche das manuelle Wechseln auf die unterschiedliche Energiebetriebsarten ermöglicht. Die Energiesteuervorrichtung ist vorzugsweise eine elektronische Steuerung, die Hardwarekomponenten aufweist, welche über eine Software steuerbar sind. Ferner ist vorzugsweise ein Bedien- und Anzeigepaneel vorgesehen, welches dem Benutzer die gerade ausgewählte Energiebetriebsart sowie die Kühltemperatur anzeigt und die manuelle Auswahl der Energiebetriebsart ermöglicht.

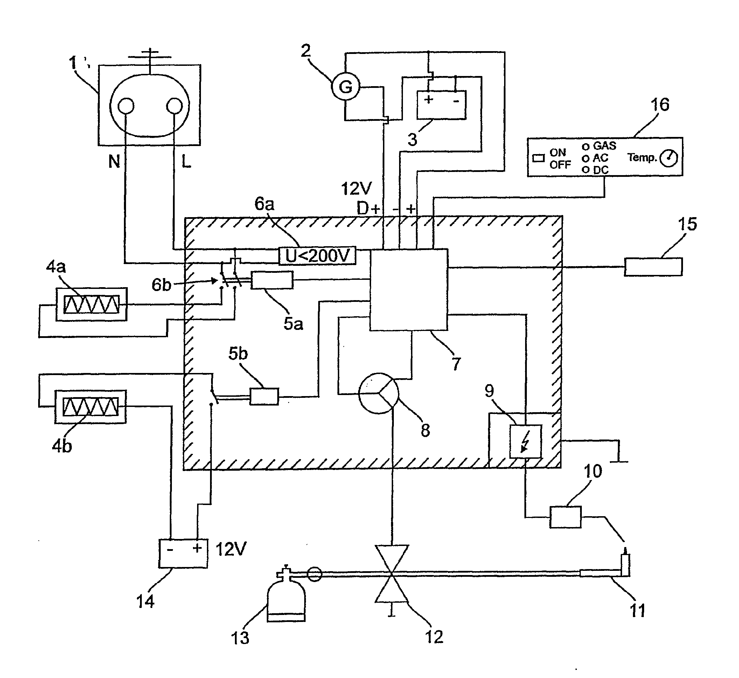

Weitere Vorteile, Merkmale und Einzelheiten der Erfindung werden durch die nachfolgende detaillierte Beschreibung anhand der beigefügten Figur ersichtlich, wobei diese Figur den schematischen Aufbau einer Ausführungsform der erfindungsgemäßen Energiebetriebsvorrichtung zeigt.

Die in der Figur gezeigte Energiebetriebsvorrichtung ist zum Einbau in ein (nicht gezeigtes) Absorptionskühlgerät vorgesehen, wobei dieses Kühlgerät insbesondere zum Einbau in Wohnmobilen, Wohnwagen, Caravans und dergleichen vorgesehen ist. Um die Energieversorgung des Aggregats mit einer Vielzahl von Energiequellen zu gewährleisten, ermöglicht die Energiebetriebsvorrichtung einen Betrieb mit Netzwechselspannung, Sicherheits-Gleichspannung sowie Gas, insbesondere Flüssiggas. Zum Betrieb mit Wechselspannung ist der Netzanschluß 1 vorgesehen, für den Gleichstrombetrieb ist der Gleichstromgenerator der Fahrzeuglichtmaschine 2, der mit der Starterbatterie 3 des Fahrzeugs verbunden ist, vorgesehen. Darüber hinaus kann als Gleichstromquelle auch z.B. das Bordnetz des Fahrzeugs verwendet werden, das mit einem entsprechenden Heizelement 4b verbunden sein kann.

Mit der elektrischen Batterie 14 wird der mit über das Relais 5b angesteuerte Schalter geschlossen, wodurch der elektrische Stromkreis mit dem Heizelement 4b hergestellt wird. Zum Betrieb mit Netzspannung werden die mit dem Relais 5a verbundenen Schalter geschlossen, was die Inbetriebnahme des Netz-Heizelements 4a zur Folge hat. Ein wesentlicher Bestandteil der Energiebetriebsvorrichtung ist die Energiesteuereinheit 7, die elektronische Bauteile zur automatischen Auswahl und optimalen Steuerung der ausgewählten Energieart umfaßt. Die Energiesteuereinheit kommuniziert mit einem Bedienpaneel 16, das z.B. an der Vorderseite des Absorptionskühlgeräts angebracht sein kann. Über das Paneel kann der Benutzer auswählen, ob er eine automatische Steuerung der Energieart über die Energiesteuereinheit 7 wünscht oder ob er die Energieart manuell einstellen möchte. Ferner kann der Benutzer das Kühlaggregat ein- und ausschalten sowie die gewünschte Kühltemperatur einstellen. Die Kühltemperatur wird ebenfalls über die Energiesteuervorrichtung 7 geregelt, wobei für diese Regelung ein im Kühlraum vorgesehener Temperatursensor 15 verwendet wird, der mit dem Energiesteuersystem 7 verbunden ist. Über die Ermittlung der Ist-Temperatur im Kühlraum und dem Vergleich dieser Temperatur mit der eingestellten SollTemperatur wird die ausgewählte Energieart entsprechend geregelt. Die Energiesteuervorrichtung ist auch für die Ansteuerung der Relais 5a und 5b und die damit verbundenen Schaltvorgänge zuständig. Befindet sich das System im Gasbetrieb, steuert die Energiesteuervorrichtung 7 die Zündungs- und Ionisationselektrode 10, die für die Zündung des Gasbrenners 11 vorgesehen sind. Ferner wird ein in der zum Brenner 11 führenden Gaszufuhrleitung vorgesehenes elektrisch ansteuerbares Ventil über eine Ansteuerung 8 mittels Pulsweitenmodulation (PWM) durch die Steuereinheit 7 geregelt. Hierdurch wird der Gasfluß in der mit einem Gasbehälter 13 verbundenen Gaszufuhrleitung geregelt und gegebenenfalls gestoppt.

Um eine automatische Energieauswahl zu gewährleisten, sind in der Vorrichtung ferner eine Unterspannungserkennungseinheit 6a sowie eine Bordnetzstromdetektionseinheit 6b vorgesehen. Es ist aber auch denkbar, daß die Elektronik mit einer autonomen Energiequelle versorgt wird. Wenn durch die Unterspannungserkennungseinheit eine Spannung z.B. unterhalb 200V ermittelt wird (d.h. unterhalb der üblichen Netzspannung von 230V), bewirkt das Relais 5a ein Umschalten der mit diesem verbundenen Schalter und eine Beendigung des Netzbetriebs. Die Energiesteuereinheit 7 steuert dann eine andere Energiequelle an. Hierbei kann es sich, abhängig von der Programmierung des Systems, um die Gleichstromquelle oder um die Gasquelle handeln. Ebenso wird im Gleichstrombetrieb mittels des Generators 2 auf eine andere Energiequelle umgeschaltet, wenn die Bordnetzstromdetektionsvorrichtung 6b keinen bzw. nur einen geringen Gleichstrom detektiert.

Eine wesentliche Neuerung des Energiebetriebssystems ist die Ausgestaltung der Gasbetriebseinheit. Der Gasbrenner 11 wird nicht mehr über ein langsam ansprechendes Thermoelement überwacht, sondern es wird ein in der Zündelektrode 10 vorgesehener Ionisationsfühler verwendet. Dieser Fühler detektiert, ob eine Gasflamme am Brenner vorhanden ist. Die Ionisationsüberwachung erfolgt dabei über eine Wechselspannung, die zwischen dem Fühler und der Brennermasse angelegt wird. Ist eine Gasflamme vorhanden, wird hierdurch die Spannung gleichgerichtet und somit ein Brennen des Gasbrenners erkannt. Diese Ionisationsüberwachung reagiert wesentlich schneller als ein Thermoelement auf ein Löschen der Brennerflamme, und es wird somit eine schneller reagierende und verbesserte Steuerung des Gasbetriebs gewährleistet. Eine solche Verbesserung kann statt mit einem Ionisationsfühler auch mit einem UV-Sensor erreicht werden, der das Licht der Gasflamme detektiert. Die Überwachung des Gasbetriebs des Systems läuft wie folgt ab: Nachdem die Gasflamme bei Umschalten auf Gasbetrieb über die Zündelektrode 10 gezündet wurde, wird über diese Elektrode ständig überwacht, ob die Gasflamme brennt. Sollte die Ionisationselektrode feststellen, daß die Gasflamme ausgeht, wird nachgezündet. Sollte dann immer noch keine Gasflamme festzustellen sein, geht das System auf Störung, und es wird eine Störmeldung ausgegeben. Die Störabschaltung hat zur Folge, daß sofort die Gaszufuhrleitung geschlossen wird.

Aus der Figur ist ferner zu entnehmen, dass der Zünd- und Ionisationselektrode ein Hochspannungstaktfunkengeber 9 vorgeschaltet ist, welcher eine Verbindung zu dem Energiesteuersystem 7 herstellt.

## Patentansprüche

1. Energiebetriebsvorrichtung zum Betreiben eines Absorptionskühlgeräts mit unterschiedlichen Energiequellen, umfassend:
eine Energiesteuereinheit (7) zum Steuern und Auswählen einer Energiequelle und wenigstens eine Gasbetriebseinheit (8, 9, 10, 11, 12) zum Betreiben des Absorptionskühlgeräts mit Gas mit einem mit einer Gaszufuhrleitung verbundenen Gasbrenner (11), der über ein Überwachungssystem steuerbar ist,
**dadurch gekennzeichnet, daß**
das das Überwachungssystem ein Zündüberwachungssystem ist und einen Ionisationsfühler und/oder UV-Sensor zum Überwachen der Gasflamme des Gasbrenners (11) umfaßt.

2. Vorrichtung nach Anspruch 1, **dadurch gekennzeichnet, daß** der Ionisationsfühler und/oder der UV-Sensor in der Zündelektrode zur Zündung des Gasbrenners integriert ist.

3. Vorrichtung nach einem der vorhergehenden Ansprüche, **dadurch gekennzeichnet, daß** die Gaszufuhrleitung ein über Pulsweitenmodulation elektrisch ansteuerbares Ventil (12) aufweist, welches die Gaszufuhr unterbricht, wenn das Absorptionskühlgerät nicht über Gas betrieben wird oder wenn von der Energiesteuereinheit (7) keine Kälteforderung oder ein Störfall festgestellt wird.

4. Vorrichtung nach einem der vorhergehenden Ansprüche , **dadurch gekennzeichnet, daß** eine Wechselstrombetriebseinheit (1) zum Betreiben des Absorptionskühlgeräts mit Netzspannung, insbesondere 230V-Netzspannung, vorgesehen ist.

5. Vorrichtung nach einem der vorhergehenden Ansprüche, **dadurch gekennzeichnet, daß** eine Gleichstrombetriebseinheit (2, 3) zum Betreiben des Absorptionskühlgeräts mit Gleichspannung, insbesondere 12V-Gleichspannung, vorgesehen ist.

6. Vorrichtung nach Anspruch 5, **dadurch gekennzeichnet, daß** die Gleichstrombetriebseinheit (2, 3) eine Generatorbetriebseinheit (2) umfaßt.

7. Vorrichtung nach Anspruch 6, **dadurch gekennzeichnet, daß** die Gleichspannungsbetriebseinheit (2, 3) ferner eine Batterie- und/oder Solarbetriebseinheit (14) umfaßt.

8. Vorrichtung nach einem der vorhergehenden Ansprüche in Kombination mit Anspruch 4, **dadurch gekennzeichnet, daß** eine Unterspannungserkennungseinheit (6a) vorgesehen ist, welche derart mit der Energiesteuereinheit (7) und der Wechselstrombetriebseinheit (1) gekoppelt ist, daß das Energiesteuersystem (7) den Wechselstrombetrieb auswählt, wenn die Unterspannungserkennungseinheit (6a) eine Spannung über einen vorgegebenen Schwellwert, vorzugsweise 200V, detektiert und die Energiesteuereinheit (7) auf Gasbetrieb oder Gleichspannungsbetrieb umschaltet, wenn die Unterspannungserkennungseinheit (6a) eine Spannung detektiert, die unter dem vorgegebenen Schwellwert liegt.

9. Vorrichtung nach einem der vorhergehenden Ansprüche in Kombination mit Anspruch 5, **dadurch gekennzeichnet, daß** die Energiesteuereinheit (7) mit einer Bordnetzstromdetektionsvorrichtung (6b) derart gekoppelt ist, daß das Energiesteuersystem den Gleichstrombetrieb auswählt, wenn Gleichstrom detektiert wird, und einen anderen Energiebetrieb auswählt, wenn kein bzw. sehr niedriger Gleichstrom detektiert wird.

10. Vorrichtung nach einem der vorhergehenden Ansprüche, **dadurch gekennzeichnet, daß** ein Temperatursensor (15) zur Anordnung des Absorptionskühlgeräts vorgesehen ist, wobei der Temperatursensor mit der Energiesteuereinheit verbunden ist und mittels der von dem Sensor ermittelten Temperatur die unterschiedlichen Energiebetriebsarten steuerbar sind.

11. Vorrichtung nach einem der vorhergehenden Ansprüche, **dadurch gekennzeichnet, daß** die Vorrichtung manuell auf die unterschiedlichen Betriebsarten umschaltbar ist.

12. Vorrichtung nach einem der vorhergehenden Ansprüche, **dadurch gekennzeichnet, daß** die Energiesteuereinheit (7) eine elektronische Steuerung, insbesondere eine über Software regelbare Steuerung ist.

13. Vorrichtung nach einem der vorhergehenden Ansprüche, **dadurch gekennzeichnet, daß** ein Bedien- und Anzeigepaneel (16) vorgesehen ist.

14. Absorptionskühlschrank, umfassend eine Energiebetriebsvorrichtung nach einem der vorhergehenden Ansprüche.
